# EUROPEAN PATENT APPLICATION

(11) **EP 1 816 034 A2**
(43) Date of publication of application: **08.08.2007**
(21) Application number: 07075040.1
(22) Date of filing: 15.01.2007
(51) Int. Cl.: B60R 16/027, B60R 16/03

(54) **Multiplexed signal system for vehicle steering column assembly**

(30) Priority: 02.02.2006 US 345960
(71) Applicant: Delphi Technologies, Inc., Troy, Michigan 48007 (US)
(72) Inventor: Rouleau, James Edward, Burt, MI 48417 (US)
(74) Representative: Denton, Michael John

(57) **Abstract**

A multiplex signal system for use with a vehicle steering column assembly (50) includes a steering wheel electronic module (92) mounted to a steering wheel (60) and a column electronic module (94) mounted remotely from the steering wheel (60). The steering wheel electronic module (92) includes a resistive switch network (118) and a voltage controlled oscillator (120) to transform activation by an operator of one or more steering wheel mounted controls (78), such as audio volume controls, into an oscillating signal having a frequency representative of the particular control that was activated. This oscillating signal is provided to the column electronic module (94), which utilizes an electronic processing device (180) to determine which of the steering wheel mounted controls (78) has been activated. Once this is determined, the electronic control module (94) operates the electrical or electro-mechanical device, such as an audio system, that corresponds to the activated steering wheel mounted control (78).

## Description

### Technical Field

The present invention relates to a multiplexed signal system for use with various vehicle electrical components, and more particularly, for use with steering wheel mounted controls.

### Background of the Invention

Vehicle steering wheel mounted controls have become popular features for a wide variety of reasons, including numerous convenience-related reasons. For example, electrical controls mounted to a steering wheel provide a driver with the ability to operate a range of electrical and electro-mechanical devices without removing their hands from the steering wheel or taking their eyes off of the road. This is especially true once a driver becomes well acclimated with a particular steering wheel arrangement, such that the function and position of each switch is memorized. The actual controls can include various types of electrical switches, such as push button switches, rocker switches, snap-action switches, etc., which can be mounted on or near the steering wheel according to one of numerous configurations. Furthermore, these controls can operate a wide variety of electrical and electro-mechanical devices located throughout the vehicle, including audio systems, cruise control systems, horns, heating/ventilating/air conditioning systems, etc. As the number of controls increases, however, so does the complexity and difficulty of connecting those controls with their corresponding electrical devices.

One area of potential complexity involves the electrical connection between the steering wheel mounted controls and the devices which they operate. This connection usually includes some type of signal conductor, such as traditional copper wires or fiber optics, which extends from the steering wheel to an electrical control unit located elsewhere on the steering column assembly or behind the dashboard. Consequently, the signal conductor must extend across the rotatable, and possibly tilting and telescoping, junction between steering wheel and the steering column assembly. This can complicate the design process, as the wires or other signal conductors can often get twisted or otherwise caught up during rotational movement of the steering wheel. One approach to this challenge involves the use of a rotatable coil having a tensioned spool for letting wire out and taking it in during rotation of the steering wheel. Even with such an arrangement, it is still desirable to have as few wires as possible extending from the steering wheel. One way to minimize the number of conductors yet transmit a plurality of signals, is through the use of a multiplexing device.

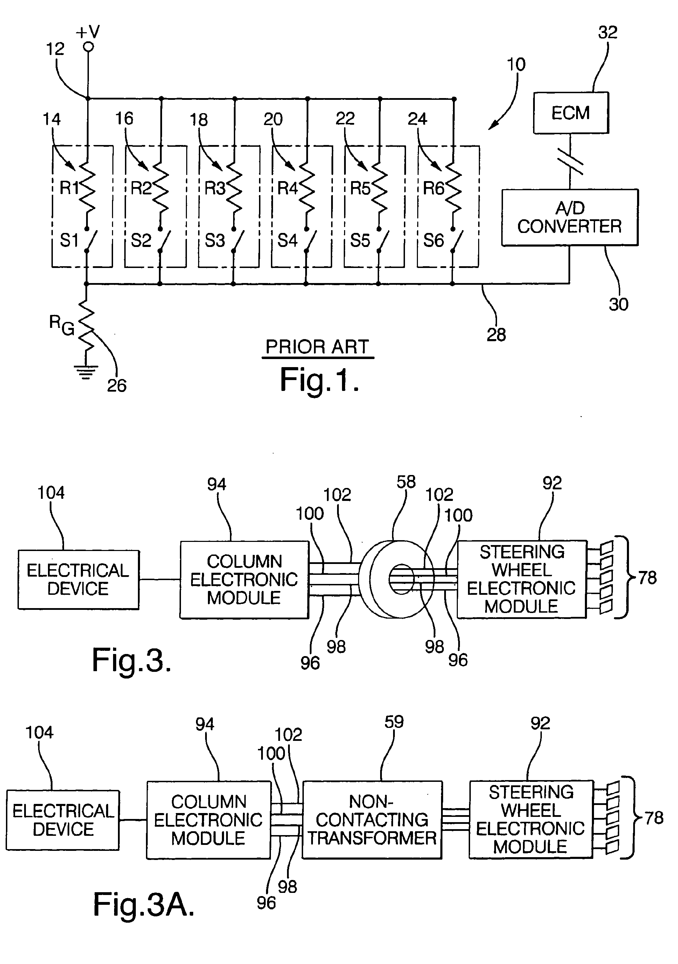

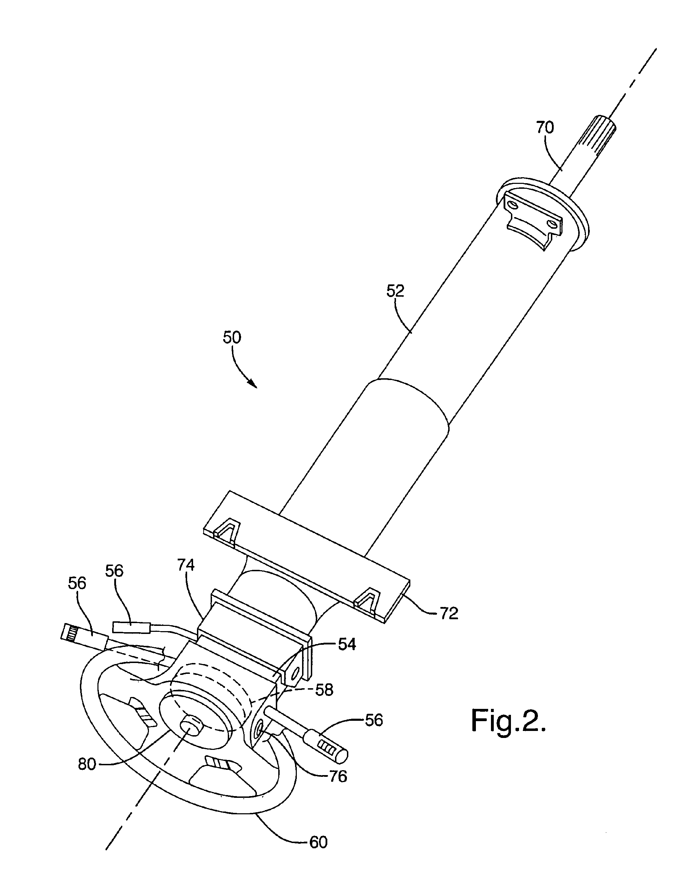

Figure 1 shows an example of a simple prior art multiplexing device 10 that generally includes a voltage input terminal 12, a series of resistor/switch pairs 14-24, a ground resistor 26, an analog output 28, an analog/digital converter (A/D converter) 30, and an electronic control module 32. Activation of a steering wheel mounted control, which in turn activates a corresponding switch S1-S6, causes an analog signal to be sent to the A/D converter. The voltage level of this signal indicates which of the particular steering wheel mounted controls have been engaged. For instance, engagement of a steering wheel mounted volume control for an audio system could cause switch S4 to close. Closure of this switch affects the voltage at analog output 28, which in turn affects the digital signal provided to the ECM 32 by the A/D converter. Accordingly, multiplexing device 10 is able to transmit signals indicating which one of multiple steering wheel mounted controls has been engaged, yet do so on a single electrical connection. One drawback of device 10, however, involves the limited number of unique voltage ranges available to the digital signal provided to the ECM. Stated differently, each switch introduces a certain amount of error into the system. In order to reduce the possibility of the ECM misinterpreting a signal due to this error, an error range is used in connection with each digital signal. The larger the error range, the less the signal processing errors, but the less number of unique voltage ranges available as well. Accordingly, a large number of steering wheel mounted controls each having a large error range, will often use up a large portion of the unique voltage ranges available for the signal.

Thus, it would be advantageous to provide a multiplexed signal system for use with a steering column assembly having numerous steering wheel mounted controls, wherein the system was capable of accommodating a large number of controls with a relatively low amount of error.

### Summary of the Invention

In accordance with the present invention, there is provided a multiplexed signal system for use with a vehicle steering column assembly. The system includes a steering wheel electronic module having a resistive switch network and a voltage controlled oscillating device capable of providing an oscillating signal representative of the state of a particular steering wheel mounted control. The system also includes a column electronic module having a frequency to voltage converter for receiving and converting the oscillating signal into a voltage signal, and an electronic processing device capable of utilizing the voltage signal to determine the state of the steering wheel mounted control.

According to another embodiment, the present invention provides a steering column assembly that generally includes the multiplexed signal system mentioned in the preceding paragraph.

Objects, features and advantages of this invention include, but are not limited to, providing an improved multiplexed signal system for use with a steering column assembly that utilizes the wide range of frequencies available to a voltage controlled oscillating device to communicate signals between a steering column electronic module and a column electronic module.

### Brief Description of the Drawings

The present invention will now be described, by way of example, with reference to the appended description, claims and drawings, wherein:
Figure 1 shows an example of a prior art multiplexing device;
Figure 2 shows an example of a steering column assembly utilizing the multiplex signal system of the present invention;
Figure 3 shows a general block diagram of an embodiment of the multiplex signal system shown in Figure 2;
Figure 3A shows a general block diagram of another embodiment of the multiplex signal system shown in Figure 2;
Figure 4 shows a more detailed view of the steering wheel electronic module shown in Figure 3;
Figure 5 shows a more detailed view of the column electronic module shown in Figure 3, according to an embodiment of the present invention; and,
Figure 5A shows a more detailed view of the column electronic module shown in Figure 3, according to another embodiment of the present invention.

### Description of the Preferred Embodiments

The multiplex signal system of the present invention utilizes a resistive switch network and a voltage controlled oscillator to connect numerous steering wheel mounted controls to an electronic control module via a single data connection. In this manner, the multiplex signal system is able to accommodate a greater number of steering wheel mounted controls and is able to tolerate larger error ranges than traditional systems. In general, activation of one of the steering wheel mounted controls causes the resistive switch network, which is operatively coupled to each of the steering wheel mounted controls, to provide the voltage controlled oscillator with an analog voltage signal. The analog voltage signal is indicative of the particular steering wheel mounted switch that has been activated. The voltage controlled oscillator, in turn, transforms the analog voltage signal into an oscillating signal having a specific frequency that corresponds to the voltage level of the analog voltage signal. This oscillating signal is then provided to an electronic control module which utilizes an electronic processing device, such as a microprocessor, to determine which of the steering wheel mounted controls has been activated. Once this is determined, the electronic control module operates the appropriate electrical or electro-mechanical device.

Referring now to Figure 2, there is shown one example of a vehicle steering column assembly 50 with which the multiplex signal system of the present invention may be used. Steering column assembly 50 could be used in one of numerous types of vehicles, and generally includes a rearward column component 52, a forward column component 54, several control stalks 56, a signal conductor coil 58, and a steering wheel 60. The rearward column component 52 is a generally tubular shaped component that is firmly attached to the vehicle and accommodates a rotating steering column shaft 70 along its axial length. A mounting bracket 72 is used to attach the rearward column component 52 to the underside of a dashboard or other appropriate location in the vehicle interior. A coupling joint 74 is located at the forwardmost end of the rearward column component, that is, the end closest to the driver, and couples the rearward and forward column components together. Depending upon the particular steering column assembly, coupling joint 74 may allow for tilting and/or telescoping of forward column component 54, with respect to the rearward column component 52. The forward column component 54 is mechanically and electrically coupled to numerous steering column components, including an ignition switch 76, various control stalks 56, which may include turn signal controls, headlamp controls, cruise controls, windshield wiper controls, etc, as well as any other components that are appropriately mounted to the steering column. Signal conductor coil 58 is generally coaxial with steering column shaft 70, and includes a tensioned spool that lets out and retracts conductors, such as copper wire or fiber optics. The signal conductor coil 58, prevents the conductors from becoming twisted or otherwise caught up in the coil during rotation of the steering wheel, and can therefore be though of as a rotational wire coupling device. Steering wheel 60 can be designed according to one of numerous configurations known in the art, and includes several steering wheel mounted controls 78 located on the front or forward surface of the steering wheel. An example of a steering wheel mounted control is shown in U.S. Patent No. 6,525,283, which is also assigned to Delphi Technologies, Inc., and is herein incorporated by reference. Also mounted to that front surface is an air bag cover 80, behind which is located a driver's side airbag. Steering wheel 60 is fixedly connected to steering column shaft 70 such that rotation of the steering wheel causes a corresponding rotation in the shaft, as is well known in the art.

Alternatively, as shown in Figure 3A, the signals from the column electronic module 94 may be transmitted across an airgap using a non-contacting rotary signal transformer 59.

The steering column assembly 50 shown in Figure 2 is provided simply for exemplary purposes. Accordingly, the multiplex signal system of the present invention could also be used in connection with one of numerous other steering column assemblies.

Turning now to Figure 3, there is shown a general block diagram of an embodiment of multiplex signal system 90 of the present invention, which generally includes a steering wheel electronic module 92 and a column electronic module 94, which are electrically coupled together via one or more conductors 96-102 by way of signal conductor coil 58. In one embodiment, the steering wheel electronic module 92 may be implemented as an integrated circuit located within the steering wheel assembly 60. The steering wheel electronic module 92 generates an oscillating signal upon activation of one of the steering wheel mounted controls. This oscillating signal has a frequency representative of the particular steering wheel mounted control 78 that has been activated, and is sent to the column electronic module 94. The column electronic module, which may also be an integrated circuit, could be part of a larger electrical system. That is, the column electronic module 94could communicate with components other than the steering wheel electronic module 92, such as an ignition system, one or more control stalks 56, lighting systems, angular position sensors, etc. Column electronic module 94 processes the oscillating signal such that it is able to determine which steering wheel mounted control 78 has been activated. Once this is determined, the column electronic module 94 generates a control signal which is sent to one or more electrical or electro-mechanical devices 104 for controlling their operation.

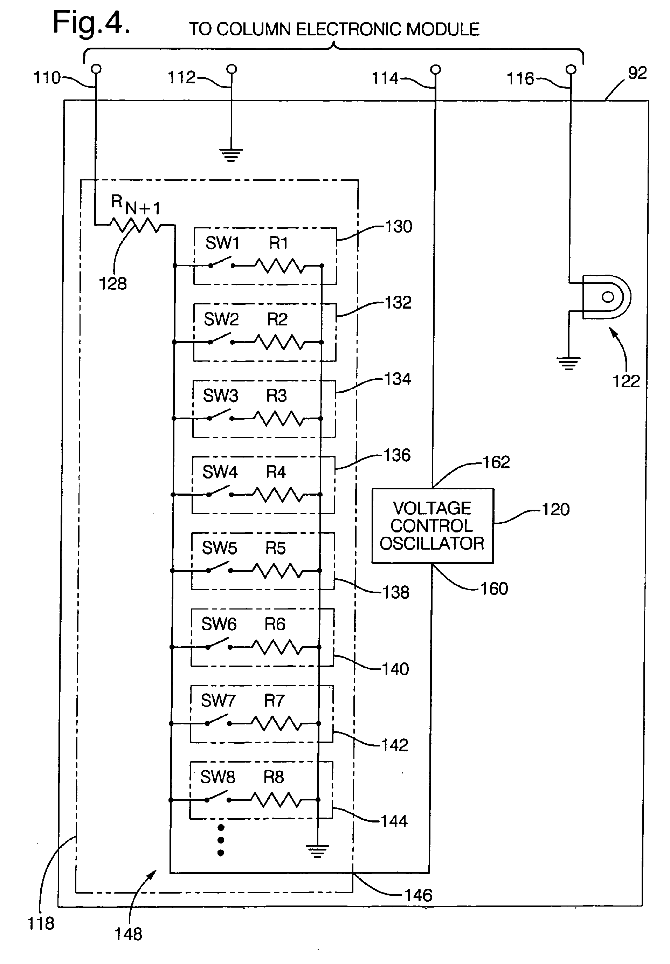

Figure 4 shows a more detailed view of steering wheel electronic module 92 of Figure 3, and generally includes a series of signal terminals 110-116, a resistive switch network 118, and a voltage controlled oscillating device 120. Of course, other components, such as illumination device 122 used for backlighting one or more steering wheel mounted controls, could also be mounted on the steering wheel electronic module. As previously stated, the steering wheel electronic module 92 may be an integrated circuit operably coupled to each of the steering wheel mounted controls, and is mounted within the steering wheel 60 at a location largely determined by the particular design of the steering wheel assembly. In this particular embodiment, the four signal terminals 110-116 are electrically coupled to a power connection 96, a ground connection 98, a data connection 100 and a back light connection 102, respectively (shown in Figure 3). Power terminal 110 is also coupled to the resistive switch network 118, which generally includes a primary resistor 128, a series of switch component / resistor pairs 130-144 and a signal output 146. As seen in the drawing, each of the switch / resistor pairs 130-144 are wired in parallel from positive nodes 148, which connect to signal output 146, to ground nodes, which connect to ground terminal 112. Thus, the voltage at the positive nodes, and hence the voltage at signal output 146, is dependent upon the state of the various switch components. Activation of a steering wheel mounted control 78 causes a corresponding switch component to close, which in turn causes a voltage drop at signal output 146. Furthermore, each of the resistors has a unique ohmic resistance, thus the voltage carried on signal output 146, which is referred to as the voltage signal, is indicative of which switch component, if any, has been closed. The particular resistive switch network embodiment shown here is but one example of a resistive switch network that may be used, as alternatives known in the electronic art also exist.

The voltage controlled oscillator 120 is an electrical component capable of receiving the voltage signal from the resistive switch network and transforming that signal into an oscillating signal, where the frequency of oscillation is dependent upon the inputted voltage. The steering wheel electronic module 92 of the present invention could incorporate one of numerous voltage controlled oscillators known in the art. The voltage controlled oscillator shown in Figure 4 generally includes a signal input 160, the device itself, and a signal output 162. In this particular embodiment, the voltage signal received by the voltage controlled oscillator is an analog voltage signal having a voltage level representative of the particular switch component pairs 130-144 that have been activated. In response to the voltage signal, device 120 generates an oscillating signal having a unique frequency corresponding to the voltage signal, and sends the oscillating signal to the column electronic module via the signal output 162.

One advantage associated with the use of a voltage controlled oscillator, as opposed to omitting the oscillator and simply providing the voltage signal directly from the resistive switch network, is an increase in the number and size of available signal state ranges. For example, systems that provide an electronic module, such as the column electronic module, with a single multiplexed signal, have a limited number of signal states available to them. If each signal state is represented by a particular voltage level plus an error range (switch / resistor pair 132, for example, could be represented as 10.0 volts ± 0.5 volts), then each signal state requires a certain voltage range (1.0 volt in this example; 9.5 - 10.5 volts). Most automotive electrical systems operate on a 12.0 volt basis. Thus, if the signal on power terminal 110 is 12.0 volts, only twelve 1.0 volt ranges and hence, twelve signal states, are available. Of course, the error range per signal state could be reduced, which would increase the number of available signal states; however, this also increases the likelihood of errors, as it would be more likely that the electronic module receiving the signal would misinterpret one signal state for another. Thus, there is a conflicting interest between providing enough signal states to accommodate each of the steering wheel mounted controls 78, yet providing a sufficient error range per signal state. The use of the voltage controlled oscillating device 120 addresses this issue. Most voltage controlled oscillators have an enormous range of frequencies available to them, and can therefore accommodate a large number of signal states each having a large frequency error range. Of course, the number and size of signal states of the voltage signal being applied to the voltage controlled oscillator 120 are still limited by the constraints mentioned above. However, the likelihood of signal error between two components that are part of the same integrated circuit is much less than the potential signal error that may occur when transmitting a signal from the steering wheel mounted electronic module 92 to the column electronic module 94. Accordingly, smaller voltage ranges may be used for the voltage signal being applied to signal input 160.

Steering wheel electronics module 92 may also include one or more additional electrical components, such as an illumination device 122. The illumination device shown here could be used to provide backlighting for the various steering wheel mounted controls 78, and could comprise a light emitting diode (LED), an electro-luminescent component, an incandescent bulb, or any other appropriate illumination device known in the art. Furthermore, the steering wheel electronic module could be used to accommodate electrical connections for an airbag, a horn, or any other electrical device located on the steering wheel.

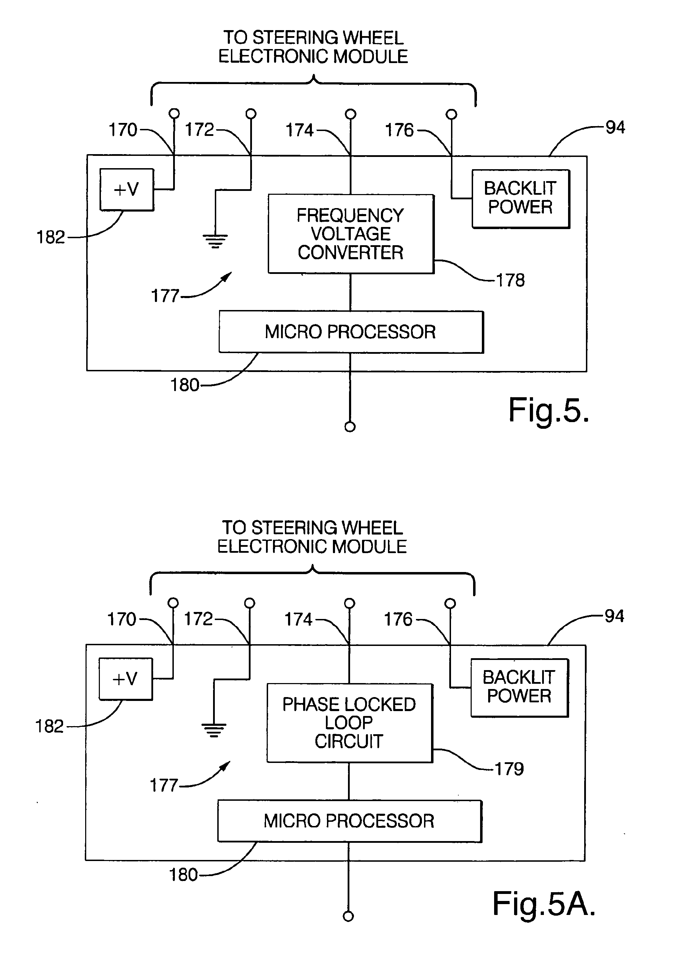

Turning now to Figure 5, there is seen a more detailed depiction of the column electronic module 94, which generally includes signal terminals 170-176, a converter 177 and an electronic processing device 180. The column electronics module is preferably an integrated circuit, such as an application specific integrated circuit (ASIC). This circuit is capable of processing the various signals generated by the numerous steering wheel mounted controls, and controlling their corresponding electrical or electromechanical devices. Signal terminal 170 provides a power signal, signal terminal 172 provides a ground signal, signal terminal 174 receives a data signal and signal terminal 176 provides a backlight signal.

In one embodiment, these signal terminals are respectively coupled to the signal terminals located on the steering wheel electronic module bearing the same name, via conductors 96-102. Signal terminal 170 is coupled to a power source 182, typically a 12 volt source, although alternative systems such as 42 volt systems could also be used. Signal terminal 172 is appropriately grounded, and signal terminal 176 is connected to some type of power source capable of providing a power signal, such as an analog or pulse width modulated signal, to the illumination device 122 or any other appropriate electrical device located on the steering wheel. Signal terminal 174, on the other hand, is a data connection that receives the oscillating signal from the steering wheel electronic module 92 and passes that signal along to the converter 177.

In another embodiment, the signals may be transmitted across an airgap using the non-contacting rotary transformer 59.

The converter 177 receives the oscillating signal from the steering wheel electronic module 92 and converts that signal into a corresponding voltage signal which is then applied to the electronic processing device 180. As would be expected, the frequency to voltage converter 177 operates in the reverse manner as the voltage controlled oscillating device; that is, it converts the analog oscillating signal into a digital voltage signal having a voltage level representative of the frequency of oscillation.

In one embodiment, the converter 177 is a frequency to voltage converter 178 (see Figure 5) which are know in the art. Numerous makes and models of frequency to voltage converters could be used. In another embodiment, the converter 177 is an electronic circuit which includes a phase locked loop circuit 179 (see Figure 5A) for tracking the frequency of the oscillating signal.

The newly converted digital voltage signal is then applied to an input terminal on the electronic processing device 180, which could include a microprocessor, a microcontroller or any other appropriate processing device. The electronic processing device utilizes software stored in an electronic memory device (not shown) to process the signal provided by the steering wheel electronic module 92. Processing this signal allows device 180 to determine which of the various steering wheel mounted controls 78 has been engaged, and to generate an appropriate control signal in response. The control signal is then sent to an electrical device 104 via output terminal 184, such that the operation of the device is controlled by the column electronic module.

In operation, a driver engages one of the various steering wheel mounted controls 78 to initiate operation of the multiplex signal system 90 of the present invention. Engagement of one of the steering wheel mounted controls causes a corresponding switch / resistor pair 130-144 to close, which in turn generates a voltage signal which is applied to the voltage controlled oscillating device 120. In this manner, the steering wheel electronic module 92 converts the mechanical depression, or other movement, of one of the steering wheel mounted controls into a representative electrical voltage signal. As should be apparent from the drawings, when all of the switch / resistor pairs are open (no steering wheel mounted controls engaged), the voltage signal received by the voltage controlled oscillating device 120 is roughly equivalent to the power signal on signal terminal 110 minus the voltage drop, if any, across primary resistor 128. However, if one or more of the switch / resistor pairs is closed, indicating activation of a steering wheel mounted control by an operator, then an additional voltage drop occurs across the corresponding resistor of that pair. The level of the voltage signal received by the voltage controlled oscillating device 120 identifies which of the various steering wheel mounted controls is closed, as each switch / resistor pair has an unique resistance. Oscillating device 120 then converts the voltage signal into a corresponding oscillating signal which is sent to the column electronic module 94. For example, in a 12 volt automotive electrical system, switch / resistor pair 134 could have an ohmic resistance that, when closed, is intended to create a voltage signal having a voltage level of 9.0 volts. However, due to wear and tear and intrinsic imperfections in the switch, the signal actually has a voltage level of 9.25 volts. The voltage controlled oscillating device 120 could be programmed such that reception of a voltage signal falling within the range of 8.5-9.5 volts, is interpreted as 9.0 volts and causes the oscillating device to generate an oscillating signal. The oscillating signal is then provided to the column electronic module 94, via one of the conductors 96-102. As previously stated, the use of an oscillating signal allows for much larger error ranges. This signal is, in turn, provided to the electronic processing device 180, which processes the signal and generates a control signal which controls the device corresponding to the particular steering wheel mounted control that was activated. Of course, the electronic processing device could perform one of many additional functions known in the art, such as filtering and error detection and correction functions, etc.

It will thus be apparent that there has been provided in accordance with the present invention multiplex signal system for use with a vehicle steering column assembly that achieves the aims and advantages specified herein. It will, of course, be understood that the foregoing description is of a preferred exemplary embodiment of the invention and that the invention is not limited to the specific embodiments shown. For instance, the resistive switch network 118 could be designed such that the switch / resistor pairs were typically in a closed state when inactivated, and would open in response to activation of one of the steering wheel mounted controls 78. Furthermore, the signal conductor coil 58 could be omitted, as the multiplex signal system of the present invention can be used with or without it. Other changes and modifications will become apparent to those skilled in the art and all such changes and modifications are intended to be within the scope of the present invention.

## Claims

1. A multiplex signal system for use with a vehicle steering column assembly, said system comprising:
a steering wheel electronic module having:
a resistive switch network including a switch component operably coupled to a steering wheel mounted control, a resistor wired in series with said switch component, and a signal output for providing a first voltage signal representative of the state of the steering wheel mounted control, and;
a voltage controlled oscillating device including a signal input coupled to said resistive switch network signal output for receiving said first voltage signal, and a signal output for providing an oscillating signal representative of said first voltage signal, and;
a column electronic module coupled to the steering wheel electronic module having:
a converter including a signal input coupled to said voltage controlled oscillating device signal output for receiving said oscillating signal, and a signal output for providing a second voltage signal representative of said oscillating signal, and;
an electronic processing device having a signal input coupled to said frequency to voltage converter signal output for receiving said second voltage signal, wherein said electronic processing device is capable of utilizing said second voltage signal to determine the state of the steering wheel mounted control.

2. The multiplex signal system of claim 1, wherein said resistive switch network comprises a plurality of switch components each operably coupled to one of a plurality of steering wheel mounted controls, and a plurality of resistors each wired in parallel to one of said plurality of switch components.

3. The multiplex signal system of claim 2, wherein each of said plurality of resistors has a unique ohmic resistance corresponding to one of the plurality of steering wheel mounted controls.

4. The multiplex signal system of claim 3, wherein activation of one of the plurality of steering wheel mounted controls causes said resistive switch network to generate said first voltage signal, said first voltage signal having a voltage level representative of the steering wheel mounted control that was activated.

5. The multiplex signal system of claim 1, wherein said voltage controlled oscillating device receives said first voltage signal and if that signal has a voltage level within a first voltage range, then said voltage controlled oscillating device generates an oscillating signal having a first frequency.

6. The multiplex signal system of claim 5, wherein said frequency to voltage converter receives said oscillating signal having a first frequency and if that frequency is within a first frequency range, then said frequency to voltage converter generates said second voltage signal having a voltage level within said first voltage range.

7. The multiplex signal system of claim 1, wherein said steering wheel electronic module and said column electronic module are coupled to one another via one or more conductors that utilize a signal conductor coil to extend through a steering column assembly.

8. The multiplex signal of claim 1, wherein said steering wheel electronic module and said column electronic module are coupled to one another via a non-contacting rotary signal transformer.

9. The multiplex signal of claim 1, wherein the converter is a frequency to voltage converter.

10. The multiplex signal of claim 1, wherein the converter includes a phase locked loop circuit.

11. A steering column assembly for use with a vehicle, said assembly comprising:
a steering wheel having a steering wheel mounted control for engagement by an operator;
a steering column shaft fixedly attached to said steering wheel such that rotational movement in one causes a corresponding rotational movement in the other;
a tubular column component for rotatably receiving at least a part of said steering column shaft, and;
a multiplex signal system comprising:
a steering wheel electronic module mounted to said steering wheel and having:
a resistive switch network including a switch component operably coupled to said steering wheel mounted control, a resistor wired in series with said switch component, and a signal output for providing a first voltage signal representative of the state of said steering wheel mounted control;
a voltage controlled oscillating device including a signal input coupled to said resistive switch network signal output for receiving said first voltage signal, and a signal output for providing an oscillating signal representative of said first voltage signal;
a conductor coupled to said voltage controlled oscillating device signal output for transmitting said oscillating signal, and;
a column electronic module mounted on said steering column assembly remotely from said steering wheel and being coupled to the steering wheel electronic module, said module having:
a converter having a signal input coupled to said conductor for receiving said oscillating signal, and a signal output for providing a second voltage signal representative of said oscillating signal, and;
an electronic processing device having a signal input coupled to said converter signal output for receiving said second voltage signal, wherein said electronic processing device is capable of utilizing said second voltage signal to determine the state of said steering wheel mounted control.

12. The steering column assembly of claim 11, wherein said steering wheel electronic module and said column electronic module are coupled to one another via one or more conductors that utilize a signal conductor coil to extend through a steering column assembly.

13. The steering column assembly of claim 11, wherein said steering wheel electronic module and said column electronic module are coupled to one another via a non-contacting rotary signal transformer.

14. The steering column assembly of claim 11, wherein the converter is a frequency to voltage converter.

15. The steering column assembly of claim 11, wherein the converter includes a phase locked loop circuit.
